# EUROPÄISCHE PATENTSCHRIFT

(11) **EP 2 085 514 B1**
(45) Veröffentlichungstag und Bekanntmachung des Hinweises auf die Patenterteilung: **17.07.2013**
(21) Anmeldenummer: 08022453.8
(22) Anmeldetag: 24.12.2008
(51) Int. Cl.: D21F 5/20, D21F 5/04, D21F 5/02

(54) **Abwärmenutzung in der Trockenpartie von Papiermaschinen**
Waste heat usage in the drying section of paper machines
Utilisation de la chaleur dégagée dans la partie sèche de machines à papier

(30) Priorität: 29.01.2008 AT 1282008
(43) Veröffentlichungstag der Anmeldung: 05.08.2009
(73) Patentinhaber: Andritz AG, 8045 Graz (AT)
(72) Erfinder: Gissing, Klaus, Ing., 8011 Judendorf Straßengel (AT); Promitzer, Wolfgang, Ing., 8020 Graz (AT)
(74) Vertreter: Schweinzer, Friedrich

(56) Entgegenhaltungen:
- DE-A1- 3 501 584

## Beschreibung

Den Gegenstand dieser Erfindung bilden ein Verfahren zur Nutzung der Abwärme einer Hochtemperaturhaube in der Trockenpartie einer Papiermaschine, sowie eine entsprechende Einrichtung zur Durchführung des Verfahrens.

Durch dieses Verfahren bzw. Vorrichtung soll die Nutzung des Energiegehaltes der Abluft einer Hochtemperaturhaube verbessert werden.

Die Trockenpartie einer Papiermaschine besteht aus einem dampfbeheizten Zylinder und einer über den Zylinder geführten dampf- oder gasbeheizten Hochtemperaturhaube. Der Zylinder wird im Allgemeinen mit Dampfdrücken zwischen 1 und 10 bar betrieben, und die Blaslufttemperatur der Hochtemperaturhaube beträgt üblicherweise zwischen 250°C und 700°C. Die stufenweise Nutzung der Abwärme der Blasluft einer Hochtemperaturhaube ist grundsätzlich Stand der Technik. Hauptsächlich werden damit Zuluft, Verbrennungsluft sowie Heizung- und Prozesswasser erwärmt. Die DE 3501584 beschreibt außerdem eine Einrichtung, mit der die Abwärme der Blasluft einer Hochtemperaturhaube zur Dampferzeugung genutzt werden kann. Dabei wird das im Trockenzylinder anfallende Kondensat nach einem Dampfabscheider in einen Abluftwärmetauscher der Hochtemperaturhaube geführt, wo es durch den Energieinhalt der Abluft aus der Hochtemperaturhaube verdampft. Anschließend wird der dadurch erzeugte Dampf wieder dem Trockenzylinder zugeführt.
Dieses bekannte Wärmerückgewinnungsverfahren hat den Nachteil, dass das durch den Wärmetauscher geführte Kondensat immer so bemessen werden muss, dass eine vollständige Verdampfung des Kondensats im Wärmetauscher bzw. nach einer allfälligen Druckreduzierung gewährleistet ist. Bei der Regelung des Kondensatflusses durch den Wärmetauscher muss daher immer die Verdampfungskapazität des Wärmetauschers berücksichtig werden, dies führt bei Schwankungen der Haubenablufttemperatur zu Regelproblemen.

Der Erfindung liegt daher die Aufgabe zugrunde, ein verbessertes und leichter regelbares Wärmerückgewinnungsverfahren zur Verfügung zu stellen, das die oben genannten Nachteile umgeht beziehungsweise die Abwärme der Abluft besser nutzt. Außerdem betrifft die Erfindung eine entsprechende Einrichtung, mit der dieses verbesserte Wärmerückgewinnungsverfahren durchgeführt wird.

Gelöst wird diese Aufgabe durch ein Wärmerückgewinnungsverfahren gemäβ Anspruch 1.

Der Abdampf muss dabei nicht aus einem Trockenzylinder der Trockenpartie kommen, sondern kann auch aus anderen Prozessen stammen, bei denen Dampf benötigt wird.

Die Wärmerückgewinnung durch einen eigenen Kondensatkreislauf hat den Vorteil, dass der Durchfluss des Kondensats durch den Wännetauscher der Hochtemperaturhaube unabhängig von der Dampfzufuhr zum Trockenzylinder oder zu anderen Aggregaten geregelt werden kann. Die Rückführung der Kondensatleitung nach dem Wärmetauscher in den Dampfabsdieider hat weiters den Vorteil, dass eine vollständige Verdampfung des Kondensats nicht erforderlich ist, nicht verdampftes Kondensat wird einfach ein weiteres Mal dem Wärmetauscher zugeführt, dadurch lässt sich die Abwärme der Abluft der Hochtemperaturhaube optimal für die Dampferzeugung nutzen.

In einer günstigen Ausführungsform des Verfahrens, wird der Abdampf dem dampfbeheizten Trockenzylinder entnommen, dadurch kann die Abwärme der Hochtemperaturhaube direkt zur Dampferzeugung für den Trockenzylinder verwendet werden.

Alternativ dazu ist es natürlich auch denkbar, dass der Abdampf für das Wärmerückgewinnungsverfahren einem separaten Dampfsystem entnommen wird.

Es ist vorteilhaft, wenn der Druck im Wärmetauscher größer ist als der Druck im Dampfabscheider, dadurch kann erreicht werden, dass das Kondensat erst bei der Rückführung in den Dampfabscheider verdampft. Dabei ist es günstig, wenn der Druck im Wärmetauscher 15 bis 25 bar und der Druck im Dampfabscheider 5 bis 10 bar beträgt.

Es ist zweckmäßig, wenn ein weiterer Teil des Kondensats aus dem Dampfabscheider abgeführt und einem Kessel zur Dampferzeugung zugeführt wird. Dadurch kann bei zu geringer Verdampfungsleistung des Wärmetauschers verhindert werden, dass sich im Dampfabscheider zu viel Kondensat ansammelt.

Besonders vorteilhaft ist es, wenn der Massenfluss des Kondensats, welches durch den Wärmetauscher geführt wird, größer ist, als der Massenfluss des Kondensats, das dem Kessel zugeführt wird. Der größere Massenfluss durch den Wärmetauscher ermöglicht eine verbesserte Abwärmenutzung.

Gegenstand der Erfindung bildet auch eine Einrichtung zur Nutzung der Abwärme einer Hochtemperaturhaube in einer Trockenpartie einer Papiermaschine gemäβ Anspruch 9. Die Führung des Kondensats in einem separaten Kreislauf macht die Regelung der Wärmerückgewinnung unabhängig von der Regelung der Dampfzufuhr,

In einer vorteilhaften Ausführung ist der Dampfabscheider dem Trockenzylinder nachgeschaltet, dadurch kann die Abwärme der Haubenabluft zur Dampferzeugung für den Trockenzylinder verwendet werden.

Alternativ dazu kann der Dampfabscheider auch mit einem separaten Dampfsystem verbunden sein, Der generierte Dampf kann dabei für Heizzwecke im Stoffäufbereftungsprozess verwendet werden oder für den Betrieb eines Dampfblaskastens. Dies ermöglicht die verbesserte Nutzung der Abwärme der Hochtemperaturhaube für weitere Aggregate, die Dampf benötigen.

In einer günstigen Ausführungsform der Einrichtung zur Nutzung der Abwärme einer Hochtemperaturhaube ist vor dem Wärmetauscher ein Verdichter und nach dem Wärmetauscher ein Druckreduzierventil in der Kondensatkreislaufleitung angeordnet. Dadurch kann erreicht werden, dass das Kondensat erst nach dem Wärmetauscher verdampft.

Es ist sinnvoll, wenn der Wärmetauscher als Rohrbündelwärmetauscher aufgebaut ist, da dadurch eine kompakte Bauweise erreicht werden kann.

Im Folgenden werden zwei Ausführungsbeispiele der Erfindung anhand von Zeichnungen beschrieben. Es zeigen:
Fig. 1 eine schematische Gesamtansicht einer erfindungsgemäßen Einrichtung zur Nutzung der Abwärme einer Hochtemperaturhaube;
Fig. 2 eine schematische Gesamtansicht einer weiteren Variante der Erfindung;

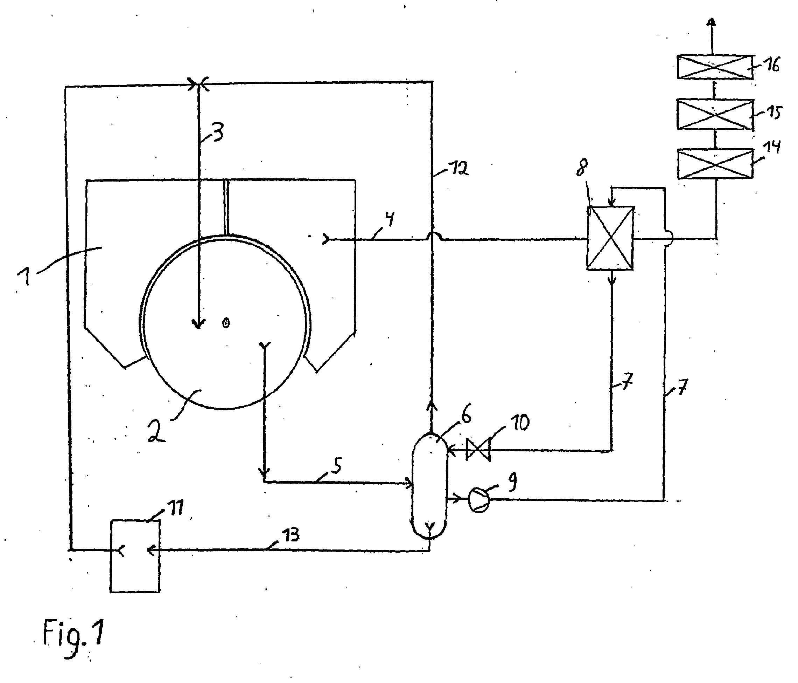

Wie aus Fig. 1 ersichtlich, wird für die Trockenpartie einer Papiermaschine eine Hochtemperaturhaube 1 verwendet, die um einen Trockenzylinder 2 angeordnet ist. Die Papierbahn wird um den Trockenzylinder 2 geführt, der über die Frischdampfleitung 3 mit Dampf beheizt wird. Die in der Materialbahn enthaltene Feuchtigkeit wird durch die in der Hochtemperaturhaube 1 eingebrachte Blasluft aufgenommen und über die Abluftleitung 4 abgeführt. Aus dem Trockenzylinder 2 führt eine Abdampfleitung 5 zu einem Dampfabscheider 6, in dem Dampf und Kondensat getrennt werden.
Ein Teil des Kondensats im Dampfabscheider 6 wird über eine Kondensatkreislaufleitung 7 im Kreis geführt. In dieser Kondensatkreislaufleitung 7 befindet sich ein Wärmetauscher 8, der über die Abluftleitung 4 der Hochtemperaturhaube 1 beheizt wird. In der Kondensatkreislaufleitung 7 befindet sich außerdem nach dem Dampfabscheider 6 ein Verdichter 9 und nach dem Wärmetauscher 8 ein Druckreduzierventil 10.
Im Dampfabscheider abgetrennter Dampf gelangt über die Dampfableitung 12 und die Frischdampfleitung 3 wieder in den Trockenzylinder 2. Ein Teil des Kondensats aus dem Dampfabscheider 6 wird über die Kondensatableitung 13 einem Kessel 11 zur Dampferzeugung zugeführt, dieser Dampf kann dann erneut über die Frischdampfleitung 3 dem Trockenzylinder 2 zugeführt werden.

Im Betrieb wird ein Teil des Kondensats aus dem Dampfabscheider 6 über die Kondensatkreislaufleitung 7 durch den Wärmetauscher 8 im Kreis geführt. Der Verdichter 9 und das Druckreduzierventil 10 sorgen für einen höheren Druck des Kondensats im Wärmetauscher 8 als im Dampfabscheider 6. Dadurch wird eine Verdampfung des Kondensats im Wärmetauscher 8 verhindert. Sobald das durch den Wärmetauscher 8 erhitzte Kondensat über das Druckreduzierventil10 in den Dampfabscheider strömt, verdampft es zumindest teilweise. Der dabei neu gebildete Dampf wird gemeinsam mit dem im Dampfabscheider 6 abgetrennten Dampf über die Dampfableitung 12 dem Trockenzylinder 2 zugeführt. Die Abluft aus der Hochtemperaturhaube 1 kann nach dem Wärmetauscher 8 noch weiteren Wärmetauschern 14, 15 und 16 zugeführt werden, in denen Verbrennungsluft, Heizungs- und Prozesswasser durch die Restwärme in der Abluft erwärmt werden.
Der Wärmetauscher 8 ist vorzugsweise ein Rohrbündelwärmetauscher.

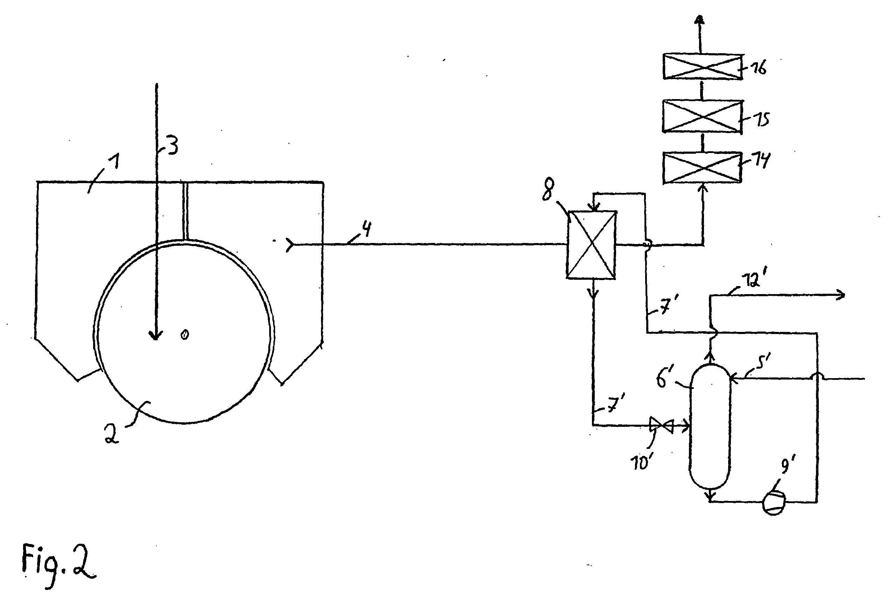

Fig. 2 stellt eine weitere Ausführung der Erfindung dar, wobei die verwendeten Bezugszeichen denen in Fig. 1 entsprechen. Bei dieser Variante wird einem separaten Dampfsystem Wärme aus der Abluft der Hochtemperaturhaube 1 zugeführt.
Hierbei wird Abdampf aus einem separaten Dampfsystem über die Abdampfleitung 5' einem Dampfabscheider 6' zugeführt. Kondensat aus dem Dampfabscheider 6' wird über eine Kondensatkreislaufleitung 7' über den Wärmetauscher 8 im Kreis geführt. Der Wärmetauscher 8 wird durch die Abluft der Hochtemperaturhaube 1 beheizt, dadurch wird dem Kondensat in der Kondensatkreislaufleitung 7' Wärme zugeführt. Der Verdichter 9' und das Druckreduzierventil 10' in der Kondensatkreislaufleitung 7' sorgen dafür, dass im Wärmetauscher 8 ein höherer Druck als im Dampfabscheider 6' herrscht, dadurch wird ein vorzeitiges Verdampfen des Kondensats im Wärmetauscher 8 unterbunden. Im Dampfabscheider 6' abgetrennter Dampf und durch die Wärmezufuhr im Wärmetausche 8 frisch erzeugter Dampf wird über die Dampfableitung 12' wieder dem separaten Dampfsystem zugeführt. Es kann sich dabei um einen Dampfblaskasten oder um ein Heizelement in der Stoffaufbereitung handeln.

Die in den Zeichnungen dargestellten Ausführungsformen stellen lediglich eine bevorzugte Ausführung der Erfindung dar. Die Erfindung umfasst auch andere Ausführungsformen bei denen beispielsweise das Kondensat in der Kondensatableitung 13 nicht einem Kessel 11 zur Dampferzeugung zugeführt wird, sondern anderen Prozessen, bei denen entweder die im Kondensat enthaltene Abwärme oder das Kondensat selbst, verwendet wird.

## Patentansprüche

1. Verfahren zur Wärmerückgewinnung in einer Trockenpartie einer Papiermaschine, wobei eine Papierbahn mit einem dampfbeheizten - Trockenzylinder (2) und einer mit Heißluft versorgten Hochtemperaturhaube (1) getrocknet und Abdampf aus einem Dampfsystem einem Dampfabscheider (6, 6') zugeführt wird, **dadurch gekennzeichnet, dass** ein Teil des Kondensats aus dem Dampfabscheider (6, 6') über eine eigene Kondensatkreislaufteitung (7,7') im Kreis geführt wird, mit dem Anfang und dem Ende deren der Dampfabscheider (6, 6') Verbunden ist, wobei sich in der Kondensatkreislaufleitung (7, T) ein Wärmetauscher (8) befindet und wobei dem Kondensat über den Wärmetauscher (8) Wärme aus der Abluft der Hochtemperaturhaube (1) zugeführt wird.

2. Verfahren nach Anspruch 1, dadurch gekenntzeichnet, dass der Abdampf dem dampfbeheizten Trockenzylinder (2) entnommen wird.

3. Verfahren nach Anspruch 1, **dadurch gekennzeichnet, dass** der Abdampf für den Dampfabscheider (6, 6') einer Vorrichtung zur Stoffaufbereitung bzw. einem Dampfblaskasten entnommen wird.

4. Verfahren nach einem der Ansprüche 1 bis 3, **dadurch gekennzeichnet, dass** der Druck im Wärmetauscher (8) größer ist als der Druck im Dampfabscheider (6, 6').

5. Verfahren nach Anspruch 4, **dadurch gekennzeichnet, dass** der Druck im Wärmetauscher (8) 15 bis 25 bar beträgt.

6. Verfahren nach Anspruch 4 oder 5, **dadurch gekennzeichnet, dass** der Druck im Dampfabscheider (6, 6') 5 bis 10 bar beträgt.

7. Verfahren nach einem der Ansprüche 1 bis 6, **dadurch gekennzeichnet, dass** ein Teil des Kondensats aus dem Dampfabscheider (6, 6') abgeführt und einem Kessel (11) zur Dampferzeugung zugeführt wird.

8. Verfahren nach Anspruch 7, **dadurch gekennzeichnet, dass** ein größerer Massenfluss an Kondensat im Kreis geführt wird als dem Kessel (11) zugeführt wird.

9. Einrichtung zur Nutzung der Abwärme einer Hochtemperaturhaube (1) in einer Trockenpartie einer Papiermaschine, bestehend aus einem damybeheizten Trockenzylinder (2), einer mit Heißluft versorgten Hochtemperaturhaube (1) und einem Dampfabscheider (6, 6') mit einer Kondensatableitung (13, 7, 7') und einer Dampfableitung (12), **dadurch gekennzeichnet, dass** ein Teil des Kondensats aus dem Dampfabscheider (6,6') über eine eigene Kondensatkreislaufleitung (7,7') im Kreis geführt ist, mit dem Anfang und dem Ende deren der Dampfabscheider (6, 6') verbunden ist und dass sich in dieser Kondensatkreislaufleitung (7, 7') ein Wärmetauscher (8) befindet, zu dem eine Abluftleitung (4) von der Hochtemperaturhause (1) führt.

10. Einrichtung nach Anspruch 9, **dadurch gekennzeichnet, dass** der Dampfabscheider (6, 6') mit dem Trockenzylinder (2) verbunden und diesem nachgeschaltet ist.

11. Einrichtung nach Anspruch 9, **dadurch gekennzeichnet, dass** der Dampfabscheider (6,6') mit einem Dampfsystem verbunden ist.

12. Einrichtung nach Anspruch 11, **dadurch gekennzeichnet, dass** das Dampfsystem eine Vorrichtung zur Stoffaufbereitung umfasst.

13. Einrichtung nach Anspruch 11, **dadurch gekennzeichnet, dass** der Dampfabscheider (6,6') mit einem Dampfblaskasten verbunden ist.

14. Einrichtung nach einem der Ansprüche 9 bis 13, **dadurch gekennzeichnet, dass** in der Kondensatkreislaufleitung (7, 7') vor dem Wärmetauscher (8) ein Verdichter (9) und nach dem Wärmetauscher (8) ein Druckreduzierventil (10) angeordnet ist,

15. Einrichtung nach einem der Ansprüche 9 bis 14, **dadurch gekennzeichnet, dass** der Wärmetauscher (8) ein Rohrbündelwärmetauscher ist.

## Claims

1. Process for heat recovery in the dryer section of a paper machine, where a paper web is dried with a steam-heated Yankee (2) and a high-temperature hood (1) supplied with hot air, and waste steam from a steam system is fed to a steam separator (6, 6'), **characterised by** part of the condensate from the steam separator (6, 6') being circulated through a separate condensate circulating pipe (7, 7'), the beginning and end of which are connected to the steam separator (6, 6'), where a heat exchanger (8) is located in the condensate circulating pipe (7, 7') and where heat from the exhaust air of the high-temperature hood (1) is applied to the condensate via the heat exchanger (8).

2. Process according to Claim 1, **characterised by** the waste steam being taken from the steam-heated Yankee (2).

3. Process according to Claim 1, **characterised by** the waste steam for the steam separator (6, 6') being taken from a device for stock preparation or from a steam blow box.

4. Process according to one of Claims 1 to 3, **characterised by** the pressure in the heat exchanger (8) being greater than the pressure in the steam separator (6, 6').

5. Process according to Claim 4, **characterised by** the pressure in the heat exchanger (8) being 15 to 25 bar.

6. Process according to Claim 4 or 5, **characterised by** the pressure in the steam separator (6, 6') being 5 to 10 bar.

7. Process according to one of Claims 1 to 6, **characterised by** part of the condensate being discharged from the steam separator (6, 6') and fed to a boiler (11) for steam generating.

8. Process according to Claim 7, **characterised by** a larger mass flow of condensate being circulated than is fed to the boiler (11).

9. Device for utilisation of waste heat from a high-temperature hood (1) in the dryer section of a paper machine, consisting of a steam-heated Yankee (2), a high-temperature hood (1) that is supplied with hot air, and a steam separator (6, 6') with a condensate discharge pipe (13, 7, 7') and a steam discharge pipe (12), **characterised by** part of the condensate from the steam separator (6, 6') being circulated through a separate condensate circulating pipe (7, 7'), the beginning and end of which are connected to the steam separator (6, 6') and by there being a heat exchanger (8) connected to the exhaust air pipe (4) from the high-temperature hood (1) inside this condensate circulating pipe (7, 7').

10. Device according to Claim 9, **characterised by** the steam separator (6, 6') being connected to the Yankee (2) and arranged after the Yankee (2).

11. Device according to Claim 9, **characterised by** the steam separator (6, 6') being connected to a steam system.

12. Device according to Claim 11, **characterised by** the steam system comprising a facility for stock preparation.

13. Device according to Claim 11, **characterised by** the steam separator (6, 6') being connected to a steam blow box.

14. Device according to one of Claims 9 to 13, **characterised by** a compressor (9) being located ahead of the heat exchanger (8) and a pressure-reducing valve (10) being located after the heat exchanger (8) in the condensate circulating pipe (7, 7').

15. Device according to one of Claims 9 to 14, **characterised by** the heat exchanger (8) being a tubular heat exchanger.

## Revendications

1. Procédé de récupération de chaleur dans la sécherie d'une machine à papier, où une nappe à papier est séchée par un sécheur (2) qui est chauffé à la vapeur et une hotte à haute température (1) qui est alimentée en air chaud, et de la vapeur évacuée provenant d'un système à vapeur est amenée à un séparateur de vapeur (6, 6'), **caractérisé en ce qu'**une partie du condensat provenant du séparateur de vapeur (6, 6') est recyclée dans une conduite de circulation de condensat (7, 7') séparée, le séparateur de vapeur (6, 6') étant relié à son début et sa fin, la conduite de circulation de condensat (7, 7') comportant un échangeur de chaleur (8) et de la chaleur provenant de l'air évacuée de la hotte à haute température (1) étant amenée au condensat par l'intermédiaire de l'échangeur de chaleur (8).

2. Procédé selon la revendication 1, **caractérisé en ce que** la vapeur évacuée est prélevée dans un sécheur (2) qui est chauffé à la vapeur.

3. Procédé selon la revendication 1, **caractérisé en ce que** la vapeur évacuée servant pour le séparateur de vapeur (6, 6'), est prélevée dans un dispositif de préparation de pâte ou une caisse à vapeur.

4. Procédé selon l'une des revendications 1 à 3, **caractérisé en ce que** la pression régnant à l'échangeur de chaleur (8) est supérieure à celle régnant au séparateur de vapeur (6, 6').

5. Procédé selon la revendication 4, **caractérisé en ce que** la pression régnant à l'échangeur de chaleur (8) va de 15 à 25 bar.

6. Procédé selon la revendication 4 ou 5, **caractérisé en ce que** la pression régnant au séparateur de vapeur (6, 6') va de 5 à 10 bar.

7. Procédé selon l'une des revendications 1 à 6, **caractérisé en ce qu'**une partie du condensat est évacuée à partir du séparateur de vapeur (6, 6') et amenée à une chaudière (11) de génération de vapeur.

8. Procédé selon la revendication 7, **caractérisé en ce que** le courant de masse de condensat mis en circulation est plus grand que le courant de masse amené à la chaudière (11).

9. Dispositif d'utilisation de chaleur évacuée d'une hotte à haute température (1) dans la sécherie d'une machine à papier, comportant un sécheur (2) chauffé à la vapeur, une hotte à haute température (1) alimentée en air chaud et un séparateur de vapeur (6, 6') avec décharge de condensat (13, 7, 7') et décharge de vapeur (12), **caractérisé en ce qu'**une partie du condensat provenant du séparateur de vapeur (6, 6') est mis en circulation dans une conduite de circulation de condensat (7, 7') séparée, le séparateur de vapeur (6, 6') étant relié à son début et sa fin, et la conduite de circulation de condensat (7, 7') comportant un échangeur de chaleur (8), auquel est relié une canalisation d'air (4) provenant de la hotte à haute température (1).

10. Dispositif selon la revendication 9, **caractérisé en ce que** le séparateur de vapeur (6, 6') est relié au sécheur (2) et monté en aval de ce dernier.

11. Dispositif selon la revendication 9, **caractérisé en ce que** le séparateur de vapeur (6, 6') est relié à un système à vapeur.

12. Dispositif selon la revendication 11, **caractérisé en ce que** le système à vapeur comporte un dispositif de préparation de pâte.

13. Dispositif selon la revendication 11, **caractérisé en ce que** le séparateur de vapeur (6, 6') est relié à une caisse à vapeur.

14. Dispositif selon l'une des revendications 9 à 13, **caractérisé en ce qu'**un compresseur (9) est disposé dans la conduite de circulation de condensat (7, 7') en amont de l'échangeur de chaleur (8) et un réducteur de pression (10) est disposé en aval de l'échangeur de chaleur (8).

15. Dispositif selon l'une des revendications 9 à 14, **caractérisé en ce que** l'échangeur de chaleur (8) est un échangeur de chaleur à faisceaux tubulaires.
